# EUROPÄISCHE PATENTSCHRIFT

(11) **EP 2 539 210 B1**
(45) Veröffentlichungstag und Bekanntmachung des Hinweises auf die Patenterteilung: **07.06.2017**
(21) Anmeldenummer: 11724022.6
(22) Anmeldetag: 25.02.2011
(51) Int. Cl.: B62D 29/00, B62D 25/14

(54) **STRUKTURBAUTEIL**
STRUCTURAL CONSTRUCTION UNIT
ÉLÉMENT DE STRUCTURE PORTEUSE

(30) Priorität: 25.02.2010 DE 102010009354
(43) Veröffentlichungstag der Anmeldung: 02.01.2013
(73) Patentinhaber: Magna Exteriors&Interiors (Bohemia) S.r.o., 46078 Liberec (CZ)
(72) Erfinder: HASL, Paul, 460 14 Liberec (CZ)
(74) Vertreter: Glawe, Delfs, Moll
(86) Internationale Anmeldenummer: PCT/IB2011/000817
(87) Internationale Veröffentlichungsnummer: WO 2011/104636

(56) Entgegenhaltungen:
- EP-A1- 1 112 915
- WO-A1-2010/069087
- DE-A1-102008 013 506
- FR-A1- 2 877 633
- US-A1- 2003 184 099

## Beschreibung

Die vorliegende Erfindung betrifft ein Strukturbauteil.

Derartige Strukturbauteile, können beispielsweise als Tragstrukturen bei Kraftfahrzeugen, insbesondere als Querträger in Kraftfahrzeugen hinter der Instrumententafel eingesetzt werden. Ein derartiger Querträger dient dazu, in einem Kraftfahrzeug eine Verbindung zwischen den A-Säulen zu schaffen, an der die Instrumententafel, das Klimagerät, das lenkradseitige Lenkstocklager, der Airbag und andere Baugruppen aufgehängt werden können. Der Querträger muss hierfür eine hohe Steifigkeit aufweisen, um die aus der Lenkstockanbindung über das Lenkrad eingeleiteten Kräfte abstützen zu können.

Bekannt sind derartige Querträger aus Stahlrohrkonstruktionen. Diese besitzen allerdings ein sehr hohes Gewicht, was sich nachteilig auf den Kraftstoffverbrauch auswirkt. In weiteren Entwicklungen wurden zur Reduzierung des Gewichts daher Querträger aus einer Kombination von Metall und Kunststoff hergestellt. Aus der EP 0 370 342 ist ein solcher Querträger in Hybridbauweise bekannt. Dieser besitzt einen schalenartigen Grundkörper aus Metall, in dessen Innenraum Verstärkungsrippen angeordnet sind. Diese Verstärkungsrippen bestehen aus eingespritztem Kunststoff und sind mit dem Grundkörper an einer Vielzahl von Durchbrüchen verbunden.

Aus der FR 2 877 633 A1 ist ein Querträger für ein Kraftfahrzeug mit zwei in den Wandungen eines Kunststoffrohres gespannt umspritzten Kabeln bekannt.

Aufgabe der vorliegenden Erfindung ist es, ein als Querträger zur Anbindung zwischen den A-Säulen eines Kraftfahrzeugs ausgebildetes Strukturbauteil derart weiterzubilden, das es ein geringes Gewicht aufweist, eine hohe mechanische Stabilität und Steifigkeit besitzt und einfach und kostengünstig herstellbar ist.

Diese Aufgabe löst die vorliegende Erfindung durch ein Strukturbauteil mit den in Patentanspruch 1 angegebenen Merkmalen.

Durch den Einsatz von Kunststoffmaterialien kann eine deutliche Reduzierung des Gesamtgewichtes des Strukturbauteils erzielt werden. Durch das Umspritzen und die Integration der als Metalldrähte ausgebildeten Verstärkungsfilamente im äußeren Bereich des Strukturbauteils wird den-noch eine hohe Steifigkeit erzielt. Die erfindungsgemäße Ausgestaltung erlaubt eine kostengünstigere Herstellung als Strukturbauteile die als gestanzte Stahlteile oder Rohrrahmenstrukturen gefertigt sind. Durch die Einbettung von Verstärkungsfilamenten in den äußeren Bereichen der Kunststoffstruktur wird bei der Verwendung von Strukturbauteilen im Kraftfahrzeug ein verbessertes Crash-Verhalten erzielt.

Bei der Verwendung von Drähten als Verstärkungsfilamente kann mittels einfacher handelsüblicher Elemente ein kostengünstiges Strukturbauteil hergestellt werden. Für unterschiedlich geformte Strukturbauteile können die Drähte in einfacher Weise vorgeformt werden.

Vorteilhafte Ausgestaltungen der vorliegenden Erfindung sind in den Unteransprüchen angegeben.

Die Erfindung wird nachfolgend anhand in den Zeichnungen dargestellter Ausführungsbeispiele beschrieben.

Es zeigt:
Fig. 1 eine erfindungsgemäßes Strukturbauteil in einer perspektivischen Darstellung in einer halboffenen wannenförmigen Ausführungsform,
Fig. 2 ein weiteres Ausführungsbeispiel eines Strukturbauteils in einer perspektivischen Darstellung mit einer länglichen geschlossenen Kunststoffstruktur; und
Fig. 3 die Ausführungsform gemäß Fig. 1 in einer aufgeschnittenen Darstellung mit freigelegten Verstärkungsfilamenten.

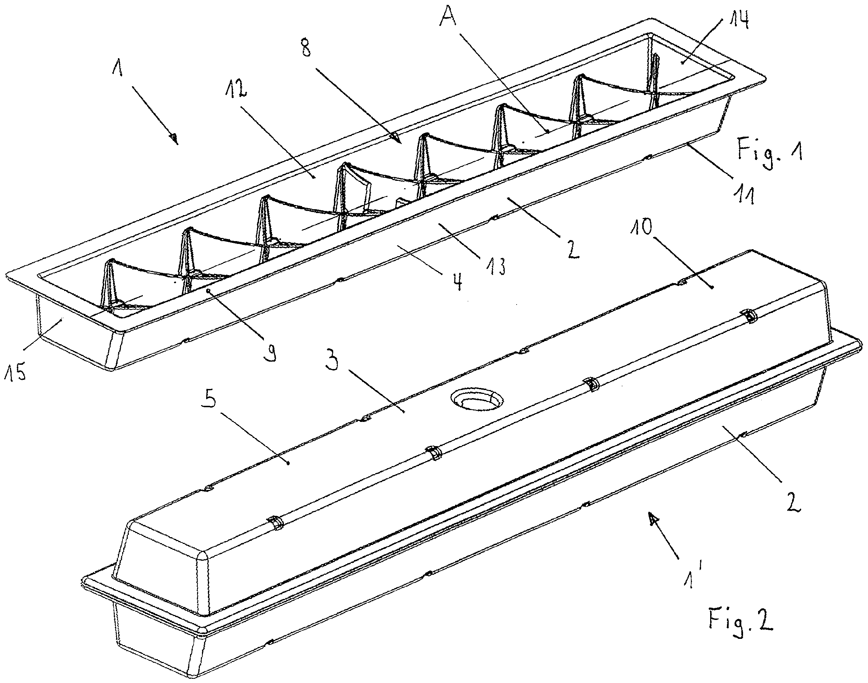

Fig. 1 zeigt in einer Explosionsdarstellung eine Ausführung eines Strukturbauteils 1, das einen länglichen schalenförmigen Grundkörper aus einem Kunststoff aufweist. Die Längsachse des Grundkörpers ist mit A bezeichnet. Der Grundkörper weist im Querschnitt eine im Wesentlichen u-förmige Struktur auf und wird durch eine Bodenfläche 11, zwei längliche Seitenflächen 12, 13 und zwei quer verlaufende Seitenflächen 14, 15 begrenzt. Die Seitenflächen 12, 13, 14, 15 des Grundkörpers sind an den oberen Randkanten rechtwinklig nach außen umgebogen und bilden einen umlaufenden abgewinkelten Randbereich 9. Der Grundkörper bildet die äußeren Bereiche 4 der Kunststoffstruktur. Im Innenraum des Grundkörpers sind zwischen den Seitenwänden 12, 13, 14, 15 Verstärkungsrippen 8 aus Kunststoff angeordnet. Diese Verstärkungsrippen 8 bilden eine innere Rippenstruktur und sind ausgehend von den Seitenwänden 12, 13 in einem Winkelbereich zwischen 30 und 60 Grad, vorzugsweise 45 Grad angeordnet. Bei dem zeichnerisch dargestellten Ausführungsbeispiel verlaufen die Verstärkungsrippen 8 ausgehend von den Seitenwänden 12, 13 in einem Winkel von +/- 45 Grad. Diese Verstärkungsrippen 8 sind wie dargestellt derart angeordnet, dass sie ein rautenförmiges Gitter im Innenraum des Grundkörpers bilden. Um die Stabilität der Kunststoffstruktur zu erhöhen, sind in den Randbereichen der Bodenfläche 11 in Längsrichtung A verlaufende Verstärkungsfilamente 6 eingebettet. Diese Verstärkungsfilamente 6 sind in dem dargestellten Ausführungsbeispiel als Metalldrähte ausgebildet, die in ihrer Oberfläche Ausformungen 7 aufweisen. Diese Ausformungen 7 können regelmäßig beabstandet angeordnete Löcher, Rillen oder dergleichen sein. In einer bevorzugten Ausgestaltung des Erfindungsgedankens sind die Verstärkungsfilamente 6 aus Metall, insbesondere Stahl ausgebildet und besitzen zur Vermeidung von Korrosion eine Beschichtung. Die Stahldrähte weisen vorzugsweise einen Durchmesser zwischen 3-4mm auf. In einer weiteren Ausgestaltung können die Verstärkungsfilamente auch als Organobleche, Metall-streifen, Metallformteile oder Drahtgeflechte ausgebildet sein.

Bei der Herstellung des Strukturbauteils 1, 1' werden die Verstärkungsfilamente 6 aus Metall mit dem Kunststoff umspritzt. Beim Einspritzen des Kunststoffs in die entsprechenden Ausformungen 7 in den Verstärkungsfilamenten 6 wird der geforderte Formschluss zwischen Kunststoff und Metall erreicht. In weiteren Ausgestaltungen der Erfindung können die Verstärkungsfilamente 6 längs der gesamten Längserstreckung des Strukturbauteils 1, 1' angeordnet, oder auch nur abschnittsweise vorgesehen sein.

Bei der Herstellung des Strukturbauteils werden in einem ersten Schritt die als Drähte ausgebildeten Verstärkungsfilamente 6 parallel beabstandet in ein Spritzwerkzeug eingelegt. Anschließend wird der Grundkörper mit Verstärkungsrippen gespritzt und dabei die Verstärkungsfilamente 6 mit der Kunststoffmasse umspritzt. Anschlusselemente für die verschiedenen Baugruppen können ebenfalls direkt an das Strukturbauteil im Spritzgussverfahren angespritzt werden. Nähere Einzelheiten zu dem Spritzvorgang werden an dieser Stelle nicht genannt, da sie für den Fachmann bekannt sind. Als Kunststoffmaterialien für den Grundkörper mit Verstärkungsrippen können thermoplastische Verbundwerkstoffe, z.B. glas-, kohle-, oder aramidfaser-verstärktes Thermoplast wie z.B. Polypropylen, Polyamid, Polycarbonate verwendet werden.

In weiteren Ausgestaltungen können der Grundkörper im Querschnitt und im Verlauf andere Ausgestaltungen aufweisen. Die als Drähte ausgebildeten Verstärkungsfilamente 6 können dabei in einfacher Art und Weise an die entsprechende Formgebung des Grundkörpers angepasst werden.

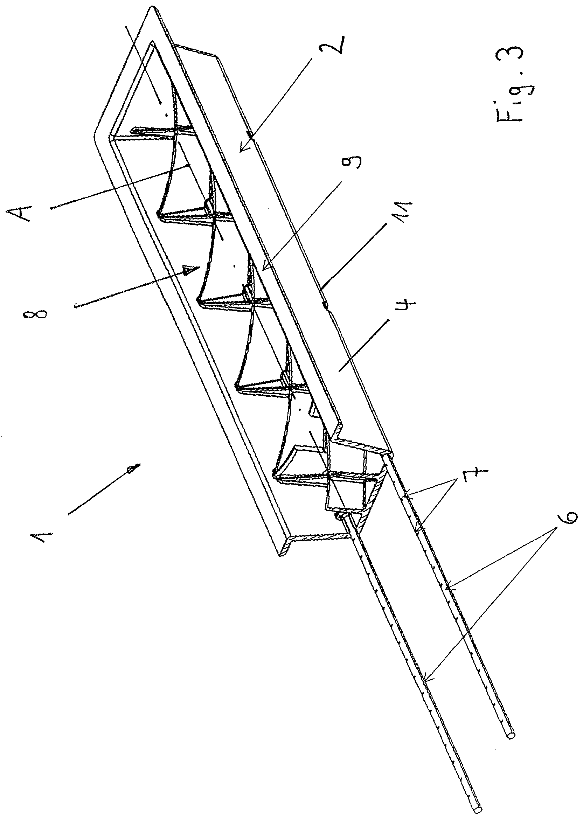

In der in Figur 3 dargestellten Ausführungsform sind zwei schalenförmige halboffene Strukturbauteile 2, 3 zu einem geschlossenen Strukturbauteil zusammengefügt. Die einzelnen Strukturbauteile 2, 3 sind identisch aufgebaut und entsprechen der zu den Figuren 1 und 3 beschriebenen Ausführungsform. Die beiden halboffenen Strukturbauteile sind entlang ihrer umlaufenden abgewinkelten Längs- und Querkanten 9 verbunden. Die Verbindung an diesen Nahtstellen kann dabei durch Kleben oder Schweißen erfolgen. Durch die Verbindung von zwei halboffenen Strukturbauteilen 2, 3 kann ein Strukturbauteil 1' mit einem geschlossenen Querschnitt erzielt werden, welches eine noch größere Steifigkeit aufweist.

## Patentansprüche

1. Strukturbauteil (1, 1') als Tragstruktur zur Verbindung zwischen den A-Säulen eines Kraftfahrzeugs, mit
- einer Anzahl von länglichen geschlossenen oder halboffenen Kunststoffstrukturen (2, 3), die eine halboffene wannenförmige Gestalt aufweisen und durch eine innere Rippenanordnung (8) versteift sind, wobei zwei halboffene wannenförmige Kunststoffstrukturen (2, 3) mit ihren Rändern zusammengefügt sind, um eine geschlossene kastenförmige Struktur zu bilden,
- Metalldrähten (6), die in ihrer Oberfläche Ausformungen (7) aufweisen und die in Randbereichen (4, 5) der Bodenfläche (11) der Kunststoffstrukturen (2, 3) in einer Längsrichtung (A) verlaufend eingebettet sind, wobei die Metalldrähte (6) durch Umspritzen mit Kunststoffmasse der Kunststoffstrukturen (2, 3) in die Kunststoffstrukturen (2, 3) eingebettet sind und durch Einspritzen von Kunststoff in die Ausformungen (7) ein Formschluss zwischen Metall und Kunststoff erreicht wird, um bei einer Biegebeanspruchung des Strukturbauteils (1, 1') Zugkräfte aufzunehmen.

2. Strukturbauteil nach Anspruch 1, wobei die Fügeverbindung vorzugsweise durch eine Klebe- oder Schweißverbindung entlang einer umlaufenden Flanschfläche (9) ausgebildet ist.

3. Strukturbauteil nach einem der voranstehenden Ansprüche, wobei die Metalldrähte einen Durchmesser von 3 bis 4 mm aufweisen.

4. Strukturbauteil nach einem der voranstehenden Ansprüche, wobei die Kunststoffstrukturen (2, 3) aus thermoplastischen Verbundwerkstoffen, insbesondere glas-, kohle-, oder aramidfaser-verstärktem Thermoplasten, vorzugsweise Polypropylen, Polyamid, Polycarbonat bestehen.

5. Strukturbauteil nach einem der voranstehenden Ansprüche, bei dem die Ausformungen (7) beabstandet angeordnete Löcher, Rillen oder dergleichen sind.

6. Verfahren zum Herstellen eines Strukturbauteils (1, 1') als Tragstruktur für Kraftfahrzeuge, mit den folgenden Schritten:
- Bereitstellen von Metalldrähten (6) parallel beabstandet in einem Spritzwerkzeug, wobei die Metalldrähte (6) in ihrer Oberfläche Ausformungen (7) aufweisen,
- Spritzen eines Grundkörpers einer Kunststoffstruktur (2, 3) des Strukturbauteils (1, 1') mit Verstärkungsrippen und gleichzeitiges Umspritzen der Metalldrähte (6) mit Kunststoffmasse und Einspritzen von Kunststoffmasse in die Ausformungen (7), derart dass die Metalldrähte (6) in Randbereichen (4, 5) einer Bodenfläche (11) der Kunststoffstruktur (2, 3) mit halboffener wannenförmiger Gestalt unter Erzielung eines Formschlusses zwischen Metall und Kunststoff in die Kunststoffstrukturen (2, 3) eingebettet sind, um bei einer Biegebeanspruchung des Strukturbauteils (1, 1') Zugkräfte aufzunehmen,
- Zusammenfügen von zwei halboffenen wannenförmigen Kunststoffstrukturen (2, 3) mit ihren Rändern, um eine geschlossene kastenförmige Struktur zu bilden.

7. Verfahren nach Anspruch 6, bei dem die Ausformungen (7) beabstandet angeordnete Löcher, Rillen oder dergleichen sind.

8. Verfahren nach Anspruch 7, bei dem die Fügeverbindung vorzugsweise durch eine Klebe- oder Schweißverbindung entlang einer umlaufenden Flanschfläche (9) ausgebildet wird.

## Claims

1. Structural component (1, 1') as a supporting structure for the connection between the A-pillars of a motor vehicle, having
- a number of elongate closed or semi-open plastics-material structures (2, 3) which have a semi-open trough-shaped design and are reinforced for rigidity by an internal rib assembly (8), wherein two semi-open trough-shaped plastics-material structures (2, 3) by way of the peripheries thereof are joined so as to form a closed box-shaped structure;
- metal wires (6) which in the surface thereof have mouldings (7) and which in the peripheral regions (4, 5) of the base area (11) of the plastics-material structures (2, 3) are embedded so as to run in a longitudinal direction (A);
wherein, in order to absorb tensile forces in the case of flexural stress of the structural component (1, 1'), the metal wires (6) are embedded in the plastics-material structures (2, 3) by insert moulding with the plastics composition of the plastics-material structures (2, 3), and a form-fit between the metal and the plastics material is achieved by injecting plastics material into the mouldings (7).

2. Structural component according to Claim 1, wherein the join connection is preferably configured by an adhesive connection or welded connection along an encircling flange area (9).

3. Structural component according to one of the preceding claims, wherein the metal wires have a diameter of 3 to 4 mm.

4. Structural component according to one of the preceding claims, wherein the plastics-material structures (2, 3) are composed of thermoplastic composite materials, in particular glass fibre-, carbon fibre-, or aramid fibre-reinforced thermoplastics, preferably polypropylene, polyamide, polycarbonate.

5. Structural component according to one of the preceding claims, in which the mouldings (7) are bores, grooves, or the like, that are disposed so as to be spaced apart.

6. Method for producing a structural component (1, 1') as a supporting structure for motor vehicles, said method comprising the following steps:
- providing metal wires (6) so as to be spaced apart in parallel in an injection-moulding tool, wherein the metal wires (6) on the surface thereof have mouldings (7);
- injection-moulding a main body of a plastics-material structure (2, 3) of the structural component (1, 1') having reinforcement ribs, and simultaneously insert moulding the metal wires (6) with a plastics composition, and injecting a plastics composition into the mouldings (7) in such a manner that, in order to absorb tensile forces in the case of flexural stress of the structural component (1, 1'), the metal wires (6) in peripheral regions (4, 5) of a base area (11) of the plastics-material structure (2, 3) having a semi-open trough-shaped design are embedded in the plastics-material structures (2, 3) while achieving a form-fit between the metal and the plastics material;
- joining of two semi-open trough-shaped plastics-material structures (2, 3) by way of the peripheries thereof, so as to form a closed box-shaped structure.

7. Method according to Claim 6, in which the mouldings (7) are bores, grooves, or the like, that are disposed so as to be spaced apart.

8. Method according to Claim 7, in which the join connection is preferably configured by an adhesive connection or welded connection along an encircling flange area (9).

## Revendications

1. Elément de structure (1, 1') en tant que structure porteuse pour la liaison entre les colonnes A d'un véhicule automobile, avec
- un certain nombre de structures en matière plastique allongées fermées ou semi-ouvertes (2, 3), qui présentent une configuration en forme de cuvette semi-ouverte et qui sont renforcées par un agencement de nervures intérieur (8), dans lequel deux structures en matière plastique en forme de cuvette semi-ouvertes (2, 3) sont jointes par leurs bords, afin de former une structure en forme de caisson fermée,
- de fils métalliques (6), qui présentent des déformations (7) dans leur surface et qui sont noyés suivant une direction longitudinale (A) dans des régions de bord (4, 5) de la face de fond (11) des structures en matière plastique (2, 3), dans lequel les fils métalliques (6) sont noyés dans les structures en matière plastique (2, 3) par enrobage par projection avec la masse de matière plastique des structures en matière plastique (2, 3) et une liaison par emboîtement entre le métal et la matière plastique est obtenue par injection de matière plastique dans les déformations (7), afin de supporter des efforts de traction lors d'une sollicitation de flexion de l'élément de structure (1, 1').

2. Elément de structure selon la revendication 1, dans lequel la jonction est formée de préférence par un assemblage collé ou soudé le long d'une face de bride périphérique (9).

3. Elément de structure selon l'une quelconque des revendications précédentes, dans lequel les fils métalliques présentent un diamètre de 3 à 4 mm.

4. Elément de structure selon l'une quelconque des revendications précédentes, dans lequel les structures en matière plastique (2, 3) sont composées de matériaux composites thermoplastiques, en particulier de thermoplastiques renforcés par des fibres de verre, de carbone ou d'aramide, de préférence de polypropylène, de polyamide, de polycarbonate.

5. Elément de structure selon l'une quelconque des revendications précédentes, dans lequel les déformations (7) sont des trous, des rainures ou analogues disposés de façon espacée.

6. Procédé de fabrication d'un élément de structure (1, 1) en tant que structure porteuse pour des véhicules automobiles, comportant les étapes suivantes:
- préparer des fils métalliques (6) disposés de façon espacée dans un outil d'injection, dans lequel les fils métalliques (6) présentent des déformations (7) dans leur surface,
- injecter un corps de base d'une structure en matière plastique (2, 3) de l'élément de structure (1, 1') avec des nervures de renforcement et en même temps enrober par projection les fils métalliques (6) avec la masse de matière plastique et injecter de la masse de matière plastique dans les déformations (7), de telle manière que les fils métalliques (6) soient noyés dans des régions de bord (4, 5) d'une face de fond (11) de la structure en matière plastique (2, 3) ayant une configuration en forme de cuvette semi-ouverte avec obtention d'une liaison par emboîtement entre le métal et la matière plastique dans les structures en matière plastique (2, 3), afin de supporter des efforts de traction lors d'une sollicitation de flexion de l'élément de structure (1, 1),
- joindre deux structures en matière plastique en forme de cuvette semi-ouvertes (2, 3) par leurs bords, afin de former une structure en forme de caisson fermée.

7. Procédé selon la revendication 6, dans lequel les déformations (7) sont des trous, des rainures ou analogues disposés de façon espacée.

8. Procédé selon la revendication 7, dans lequel on forme la jonction de préférence par un assemblage collé ou soudé le long d'une face de bride périphérique (9).
